# EUROPÄISCHE PATENTSCHRIFT

(11) **EP 1 206 769 B1**
(45) Veröffentlichungstag und Bekanntmachung des Hinweises auf die Patenterteilung: **21.05.2003**
(21) Anmeldenummer: 00958494.7
(22) Anmeldetag: 24.08.2000
(51) Int. Cl.: G09F 13/04

(54) **KANTENBELEUCHTETE INFORMATIONSTAFELN, INSBESONDERE FÜR LEITSYSTEME AUF FLUGHÄFEN UND TAXIWAYS**
EDGE-ILLUMINATED INFORMATIVE SIGNS, ESPECIALLY FOR GUIDE SYSTEMS INSTALLED AT AIRPORTS AND ON TAXIWAYS
PANNEAUX D'INFORMATION A BORDS LUMINEUX, NOTAMMENT POUR SYSTEMES DE GUIDAGE DANS DES AEROPORTS ET DES VOIES DE CIRCULATION

(30) Priorität: 02.09.1999 DE 19941992
(43) Veröffentlichungstag der Anmeldung: 22.05.2002
(73) Patentinhaber: Schott Glas, 55122 Mainz (DE); CARL-ZEISS-STIFTUNG trading as SCHOTT GLAS, 55122 Mainz (DE)
(72) Erfinder: GAYDOUL, Ekkehard, 64401 Gross-Bieberau (DE); HOEHN, Hariel, 55270 Essenheim (DE)
(86) Internationale Anmeldenummer: EP0008249
(87) Internationale Veröffentlichungsnummer: WO01018775

(56) Entgegenhaltungen:
- EP-A- 0 919 766
- DE-A- 19 519 444
- GB-A- 1 507 883

## Beschreibung

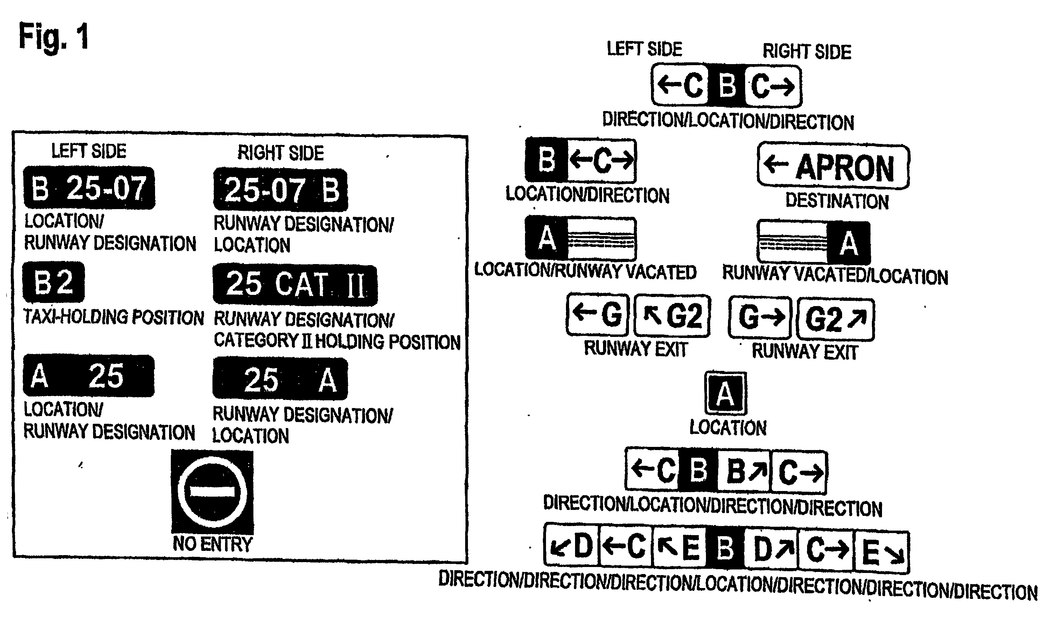

Die Erfindung bezieht sich auf innenbeleuchtete Hinweisschilder, wie sie insbesondere im Außenbereich von Flughäfen installiert sind, um Piloten zu Startbahnen und Taxiways bzw. zu Be- und Entladeterminals zu führen. Typische Ausführungen sind Figur 1 zu entnehmen.

Derzeit werden solche Schilder im allgemeinen mit innenbeleuchteten (Acryl-) Glaskästen realisiert, deren Lichtquellen im Inneren angebrachte Glüh- oder Halogenlampen bzw. Leuchtstoffröhren sind. Nachteile dieses Standes der Technik sind zunächst lichttechnische Kriterien. Die innen angebrachten Leuchtmittel sind dabei durch die motivtragende Frontscheibe zu lokalisieren und erzeugen einen deutlichen Leuchtdichtegradienten auf der Motivträgerfläche sowie lokale Variationen in der Farbortlage der typischerweise gelben oder roten Schilder. Diese Effekte stehen im Widerspruch zu Anforderungen aus internationalen Spezifikationen - z. B. ICAO Annex 14 oder FAA AC 150/5345-44F. Nicht minder schwerwiegend ist die Tatsache, daß diese Schilder durch den Rückstoß aus Flugzeugturbinen umgeblasen werden und dadurch total zerstört werden können, da sowohl (Acryl-)Glasgehäuse als auch insbesondere die Leuchtmittel zerbrechen.

All diese Schwachpunkte werden durch die vorliegende Erfindung überwunden. Diese hat als Grundlage eine Beleuchtungsanordnung gemäß der DE 197 52 392 A 1, in welcher eine faseroptische Einkopplung in eine lichtstreuende Platte beschrieben wird. Durch die dort schon beschriebene gleichförmige Lichtausbringung über die gesamte Motivträgeroberfläche werden die oben genannten Spezifikationen hinsichtlich gleichförmiger Leuchtdichte erfüllt. Durch eine geeignete Wahl bzw. Kombination von Lichtverteilungsplatten, Motivträgern und faseroptischer Einkopplung incl. verwendeter Lichtquelle wird eine Anpassung der Abstrahleigenschaften des Schildes an Farbort- und Leuchtdichtevorgaben ermöglicht. Durch die Abkoppelbarkeit von Lichtquelle und faseroptischem System läßt sich eine Sollbruchstelle realisieren. Bei einer Einbettung der Lichtquelle in ein Fundament im Boden bleibt diese selbst bei einer Zerstörung des Schildes an sich durch das Lösen desselben von der Lichtquelle an der Sollbruchstelle intakt.

Eine Alternative entsteht durch den Einsatz von LED-Leisten zur Einleuchtung in die Kanten. LEDs bieten ähnliche Modifikationsmöglichkeiten wie ein faseroptisches Einkoppelsystem und sind mechanisch sehr stabil.

In ähnlicher Anwendung eingesetzte Leuchtstoff- bzw. Kaltkathodenröhren zur Einleuchtung in die Kanten würden bei einer Zerstörung des Schildes ebenfalls zerstört (s. Stand der Technik). Zusätzlich zeigen diese Lichtquellen dadurch Probleme, dass sie bei sehr niedrigen Außentemperaturen nicht mehr starten.

## Patentansprüche

1. Faseroptische Anordnung zur Beleuchtung von Hinweisschildem, insbesondere für Startbahnen und Taxiways von Flughäfen, die aus wenigstens einer als Display fungierenden Kunststoffscheibe besteht, vor bzw. auf der die zu durchleuchtenden transparenten Informationen oder Motive angebracht sind und die Mittel zur flächigen Lichtverteilung aufweist; in welche Licht aus einem faseroptischen System parallel zur Displayebene eingekoppelt sind,
**dadurch gekennzeichnet,**
**dass** die Kanten der der Lichtverteilung in dem Display dienenden Mittel zur Lichtverteilung an den Stellen verspiegelt sind, an denen kein Licht eintritt bzw. kein Motiv beleuchtet werden soll.

2. Anordnung nach Anspruch 1,
**dadurch gekennzeichnet,**
**dass** das Licht durch LEDs erzeugt wird.

3. Anordnung nach mindestens einem der Ansprüche 1 oder 2,
**dadurch gekennzeichnet,**
**dass** die Mittel zur Lichtverteilung aus einem an seinen Seiten innen reflektierenden Hohlkörper bestehen.

4. Anordnung nach mindestens einem der Ansprüche 1 bis 3,
**dadurch gekennzeichnet,**
**dass** die als Display fungierenden Kunststoffscheiben aus (in der Hintergrundfarbe des darzustellenden Motivs) durchgefärbten Kunststoff hergestellt sind.

## Claims

1. Fibre-optic arrangement for lighting informative signs, in particular for runways and taxiways of airports, which comprises at least one plastic pane functioning as display, before or on which the transparent information or motifs to be transilluminated are applied, and which has means for flat light distribution into which light is coupled from a fibre-optic system in a fashion parallel to the display plane, **characterized in that** the edges of the means, serving the light distribution in the display, for light distribution are mirrored at the sites where no light enters and/or no motif is to be lit.

2. Arrangement according to Claim 1, **characterized in that** the light is produced by LEDs.

3. Arrangement according to at least one of Claims 1 or 2, **characterized in that** the means for light distribution comprise a hollow body reflecting inwards at its sides.

4. Arrangement according to at least one of Claims 1 or 3, **characterized in that** the plastic panes functioning as display are produced from plastic which is coloured throughout (using the background colour of the motif to be represented).

## Revendications

1. Agencement à fibres optiques pour l'éclairage de panneaux d'information, en particulier pour des pistes de décollage et des voies de circulation d'aéroports, qui se compose d'au moins une plaque en plastique servant d'affichage devant laquelle ou sur laquelle sont appliquées les informations ou motifs transparents à éclairer et qui présente des moyens pour diffuser la lumière en nappe, dans lesquels la lumière provenant d'un système de fibres optiques est injectée parallèlement au plan d'affichage,
**caractérisé en ce que**
les bords des moyens servant à la diffusion de la lumière dans l'affichage sont rendus réfléchissant pour diffuser la lumière aux endroits auxquel aucune lumière n'arrive ou aucun motif ne doit être éclairé.

2. Agencement selon la revendication 1,
**caractérisé en ce que**
la lumière est produite par des DEL.

3. Agencement selon au moins l'une des revendications 1 ou 2,
**caractérisé en ce que**
les moyens pour diffuser la lumière se composent d'un corps creux réfléchissant vers l'intérieur au niveau de ses côtés.

4. Agencement selon au moins l'une des revendications 1 à 3,
**caractérisé en ce que**
les plaques en plastique servant d'affichage sont fabriquées à partir de plastique coloré en profondeur (dans la couleur d'arrière-plan du motif à représenter).
